# EUROPEAN PATENT SPECIFICATION

(11) **EP 3 828 701 B1**
(45) Date of publication and mention of the grant of the patent: **21.02.2024**
(21) Application number: 21164226.9
(22) Date of filing: 23.03.2021
(51) Int. Cl.: G06F 9/445, G06F 8/60, G06F 9/451

(54) **MINI APP PROCESSING METHOD, SERVER, DEVICE AND STORAGE MEDIUM**
MINI-APP-VERARBEITUNGSVERFAHREN, SERVER, VORRICHTUNG UND SPEICHERMEDIUM
PROCÉDÉ DE TRAITEMENT DE MINI APPLICATION, SERVEUR, DISPOSITIF ET SUPPORT D'INFORMATIONS

(30) Priority: 30.06.2020 CN 202010611699
(43) Date of publication of application: 02.06.2021
(73) Proprietor: BEIJING BAIDU NETCOM SCIENCE AND TECHNOLOGY CO. LTD., 100085 Beijing (CN)
(72) Inventor: CHEN, Du, BEIJING, 100085 (CN); CHEN, Yuzhen, BEIJING, 100085 (CN); CAO, Zhenxing, BEIJING, 100085 (CN); WEI, Jia, BEIJING, 100085 (CN); PENG, Wei, BEIJING, 100085 (CN); YAO, Heng, BEIJING, 100085 (CN)
(74) Representative: Viering, Jentschura & Partner mbB Patent- und Rechtsanwälte

(56) References cited:
- WO-A1-2019/184053
- US-A1- 2019 188 010

## Description

### TECHNICAL FIELD

The present application relates to the field of data processing, in particular to the field of cloud computing and mini app processing.

### BACKGROUND

WO2019184053A1 discloses a method and a terminal for browsing a page of an application. The method comprises: a first application on a terminal receiving a first request to access a second application; the first application sending a second request to an installation-free application run engine on the terminal, wherein the second request is used to request access to the second application, the second request comprises an identifier of the second application, and the second application is an installation-free application and is not installed on the terminal; the installation-free application run engine obtaining an installation-free application package of the second application from a download server; the installation-free application run engine loading and running the installation-free application package of the second application; and the second application displaying a page on the second application.

US20190188010A1 discloses that methods, systems, computer-readable media, and apparatuses may provide for the creation and management of applications with dependencies. An application executing via a client application on a computing device may require a dependency, such as a software module, that is unavailable at the computing device. The application may be compiled with a remote loader module. Based on determining the dependency is unavailable at the computing device, the remote loader module may send information about the dependency to a server, which may provide instructions for retrieving the dependency. The application may then, via the remote loader and based on the instructions, request the dependency. The server may locate the dependency or generate it based on capabilities of the computing device and send the dependency to the application. The application may execute with the received dependency.

With continuous development of mini app ecosystem, more and more existing HTML5 (H5) sites are migrated to the mini app. Compared with the traditional H5, the mini app needs to download a mini app package before it can be executed. Therefore, in order to improve experience of the mini app, a main package of the mini app is pre-downloaded, so as to solve the experience problem of long waiting time caused by the need to download the package when the mini app is opened.

However, in actual scenarios, most mini apps have sub-packages in addition to the main package, for example, an interface to be opened by a user is in sub-packages. At this point, if the existing pre-downloading scheme that the main package is downloaded is still used, then there is still the problem of long waiting time due to not pre-downloading the sub-packages and so on, which will inevitably reduce user experience.

### SUMMARY

According to the invention, mini app processing methods according to claim 1 and claim 3 are provided. Moreover, a server according to claim 5, an electronic device according to claim 7, a non-transitory computer-readable storage medium according to claim 9, and a computer program product according to claim 10 are provided. Some examples of such a method, such a server, and such an electronic device are defined in the dependent claims. The present application provides a mini app processing method, apparatus, device and a storage medium.

According to the invention, a mini app processing method, implemented by a server, is provided and includes:
receiving a mini app pre-download request sent by a host application on an electronic device, wherein the mini app pre-download request is generated by the host application based on user browsing data, and at least includes a mini app page open command; the mini app pre-download request is a request for downloading a mini app;
parsing the mini app page open command, and obtaining download information required to execute the mini app page open command; wherein the download information is information comprising the mini app page open command; and
sending the download information to the host application on the electronic device, such that the host application performs mini app pre-download;
wherein the obtaining download information required to execute the mini app page open command, comprises: determining a target download package corresponding to the mini app page open command, wherein the target download package is a download package for entering a functional interface corresponding to the mini app page open command; and determining a full list of all download packages required to execute the mini app page open command, based on whether entering the functional interface corresponding to the mini app page open command depends on other download package of the mini app.

According to the invention, a mini app processing method, implemented by an electronic device, is provided and includes:
acquiring user browsing data based on a host application on the electronic device;
collecting a mini app page open command based on the user browsing data;
generating, by the host application on an electronic device, a mini app pre-download request containing the mini app page open command, and sending the mini app pre-download request to a server; wherein the mini app pre-download request is a request for downloading a mini app; and
receiving, by the host application on an electronic device, download information, sent by the server, required to execute the mini app page open command, and performing a mini app pre-download operation; wherein the download information is information comprising the mini app page open command;
wherein the download information is obtained by the server: parsing the mini app page open command; determining a target download package corresponding to the mini app page open command, wherein the target download package is a download package for entering a functional interface corresponding to the mini app page open command; and determining a full list of all download packages required to execute the mini app page open command, based on whether entering the functional interface corresponding to the mini app page open command depends on other download package of the mini app.

According to the invention, a server is provided and includes:
a request receiving unit configured for receiving a mini app pre-download request sent by a host application on an electronic device, wherein the mini app pre-download request is generated by the host application based on user browsing data, and at least includes a mini app page open command; the mini app pre-download request is a request for downloading a mini app;
a parsing unit configured for parsing the mini app page open command, and obtaining download information required to execute the mini app page open command; wherein the download information is information comprising the mini app page open command; and
a sending unit configured for sending the download information to the host application on the electronic device, such that the host application performs mini app pre-download;
wherein the parsing unit comprises: a second information determining subunit configured for determining a target download package corresponding to the mini app page open command, wherein the target download package is a download package for entering a functional interface corresponding to the mini app page open command; and a judging subunit configured for determining a full list of all download packages required to execute the mini app page open command based on whether entering the functional interface corresponding to the mini app page open command depends on other download package of the mini app.

According to the invention, an electronic device is provided and includes:
a browsing data acquiring unit configured for acquiring user browsing data based on a host application on the electronic device;
a collection unit configured for collecting a mini app page open command based on the user browsing data;
a request generating unit configured for generating, by the host application on an electronic device, a mini app pre-download request containing the mini app page open command;
a request sending unit configured for sending, by the host application on an electronic device, the mini app pre-download request to a server; wherein the mini app pre-download request is a request for downloading a mini app;; and
a download information receiving unit configured for receiving, by the host application on an electronic device, download information, sent by the server, required to execute the mini app page open command, and performing a mini app pre-download operation; wherein the download information is information comprising the mini app page open command;
wherein the download information is obtained by the server: parsing the mini app page open command; determining a target download package corresponding to the mini app page open command, wherein the target download package is a download package for entering a functional interface corresponding to the mini app page open command; and determining a full list of all download packages required to execute the mini app page open command, based on whether entering the functional interface corresponding to the mini app page open command depends on other download package of the mini app.

According to the invention, a non-transitory computer-readable storage medium is provided and stores computer instructions for causing the computer to perform the method corresponding to the forgoing server.

According to the invention, a non-transitory computer-readable storage medium is provided and stores computer instructions for causing the computer to perform the method corresponding to the forgoing electronic device.

According to the technical solution of the present application, the existing problem of long waiting time due to not pre-downloading the subpackages and the like has been solved, and thus the user experience has been improved.

It is to be understood that the contents in this section are not intended to identify the key or critical features of the embodiments of the present application, and are not intended to limit the scope of the present application. Other features of the present application will become readily apparent from the following description.

### BRIEF DESCRIPTION OF THE DRAWINGS

The drawings are included to provide a better understanding of the application and are not to be construed as limiting the application. Wherein:
FIG. 1 is a schematic diagram of a mini app processing method according to a first embodiment of the present application;
FIG. 2 is a schematic diagram of a mini app processing method according to a second embodiment of the present application;
FIG. 3 is a schematic diagram of a mini app processing method according to a third embodiment of the present application;
FIG. 4 is a schematic diagram of a mini app processing method according to a fourth embodiment of the present application;
FIG. 5 is a schematic diagram of a mini app processing method according to a fifth embodiment of the present application;
FIG. 6 is a schematic diagram of a mini app processing method according to a sixth embodiment of the present application;
FIG. 7 is a first schematic structural diagram of a server according to an embodiment of the present application;
FIG. 8 is a second schematic structural diagram of a server according to an embodiment of the present application;
FIG. 9 is a schematic structural diagram of an electronic device according to an embodiment of the present application;
FIG. 10 is an architecture diagram of an apparatus for implementing embodiments of the present application.

### DETAILED DESCRIPTION

The exemplary embodiments of the present application are described below with reference to the accompanying drawings, which include various details of the embodiments of the present application to facilitate understanding, and should be considered as merely exemplary. Also, descriptions of well-known functions and structures are omitted from the following description for clarity and conciseness.

In practical applications, more mini app dynamic capabilities are given to developers, such as, subpackages, independent subpackages and dynamic libraries. Here, the relationship between a main download package (i.e., main package), a subpackage, an independent subpackage and a dynamic library of a mini app is as follows: the main package includes information of the subpackage, the subpackage will call scripts in the main package and run depending on the main package, and the independent subpackage runs independently and does not depend on running of the main package or other subpackage. In other words, when entering the mini app from an interface corresponding to the independent subpackage, there is no need to download the main package; when entering the mini app from an interface corresponding to the subpackage, both the main package and the subpackage are needed to be downloaded. The dynamic library refers to a component library corresponding to functional components that can be added to the mini app and used directly, and runs depending on the main package.

When the foregoing dynamic capabilities are introduced into the mini app, the current method of pre-downloading the main package of the mini app cannot satisfy the foregoing scenario. On the one hand, due to the addition of dynamic capabilities, there will be situations where an interface to be opened by a user needs to be supported by other packages in addition to the main package, but the existing pre-downloading scheme does not download other packages except for the main package, and thus the addition of the dynamic capabilities directly lead to degradation of performance experience of the mini app itself. On the other hand, due to the introduction of the dynamic capabilities, the experience of the mini app has deteriorated, which also becomes a gap in developing access to the dynamic capabilities, hinders wide access of dynamic building capabilities and reduces efficiency of mini app development and iteration.

For example, in a case that an interface opened by the user corresponds to the subpackage, at this point, since what is pre-downloaded is the main package of the mini app, when the user opens the mini app, it is needed to send another request to download the sub-package, and then there is a certain download waiting time, which inevitably affects user experience.

Or, in a case that an interface opened by the user corresponds to an independent subpackage, at this point, what is pre-downloaded is the main package, which cannot be used directly. Therefore, it is needed to additionally download the independent subpackage, and there is a certain download waiting time, which inevitably affects the user experience. Further, since the independent subpackage can operate independently, the pre-downloaded main package is not only unusable this time, but also results in resource waste of requesting and downloading main package.

Or, in a case that an interface opened by the user corresponds to a page of functional components of the dynamic library, at this point, what is pre-downloaded is the main package, which cannot be used directly. Thus, there is still a waiting problem. Further, since the existing dynamic library is updated asynchronously, what the user is currently used is an old version of the last update, thus the dynamic library of the page has a poor convergence effect, and cannot be updated to a new version in time, causing damage to the experience.

In view of this, the solution of the present application provides a pre-download mechanism for a mini app package associated components, which can download related dynamic components (such as subpackage, independent subpackage, dynamic library) associated with a mini app package corresponding to an interface to be opened by a user based on dependency analysis, thereby solving the existing problem of performance degradation caused by the introduction of dynamic components, broadening an application range of the dynamic components, and improving application experience of the dynamic components.

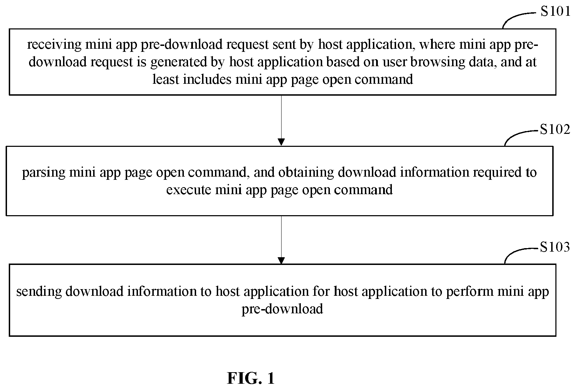

Specifically, as shown in FIG. 1, the method includes:
Step S101: receiving, by a server, a mini app pre-download request sent by a host application, where the mini app pre-download request is generated by the host application based on user browsing data, and at least includes a mini app page open command;
Step S102: parsing, by the server, the mini app page open command, and obtaining download information required to execute the mini app page open command;
Step S103: sending, by the server, the download information to the host application for the host application to perform mini app pre-download.

Here, the host application is a client running a mini app corresponding to the mini app page open command. The server is a server corresponding to the mini app.

In this way, in the solution of the present application, the server can obtain all the download information required to execute the mini app page open command based on the mini app page open command, and send all the download information required to execute the mini app page open command to the host application for the host application to perform mini app pre-download. Therefore, the existing problem of long waiting time due to not pre-downloading the subpackages and the like has been solved, and thus the user experience has been improved.

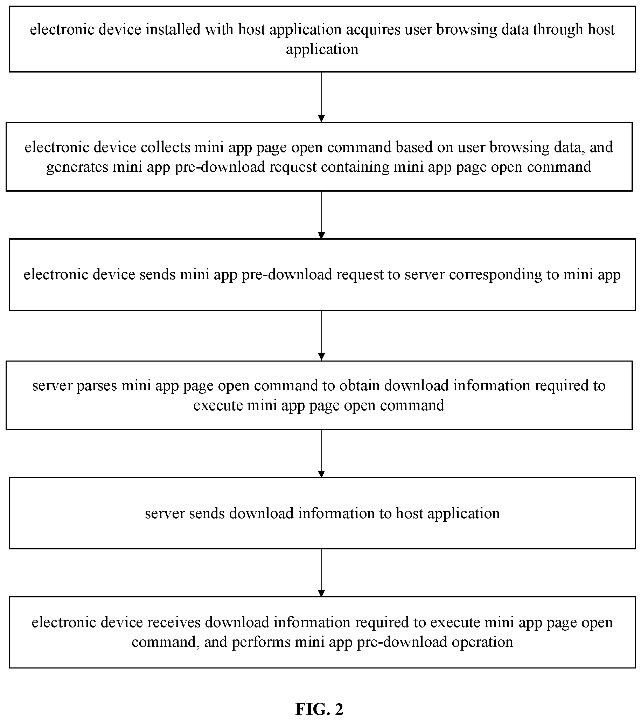

In one specific example, as shown in FIG. 2, an electronic device installed with a host application acquires user browsing data through the host application, such as user click data. Then, the electronic device collects a mini app page open command based on the user browsing data, generates a mini app pre-download request containing the mini app page open command, and sends the mini app pre-download request to a server corresponding to a mini app. Accordingly, after the server receives the mini app pre-download request sent by the host application, the server parses the mini app page open command to obtain download information required to execute the mini app page open command. The server sends the download information to the host application. The electronic device receives the download information required to execute the mini app page open command, and performs a mini app pre-download operation, so that after a user clicks on a function interface corresponding to the mini app page open command, the functional interface can be directly entered without waiting for download. Therefore, the existing problem of long waiting time due to not pre-downloading the subpackages and the like has been solved, and thus the user experience has been improved.

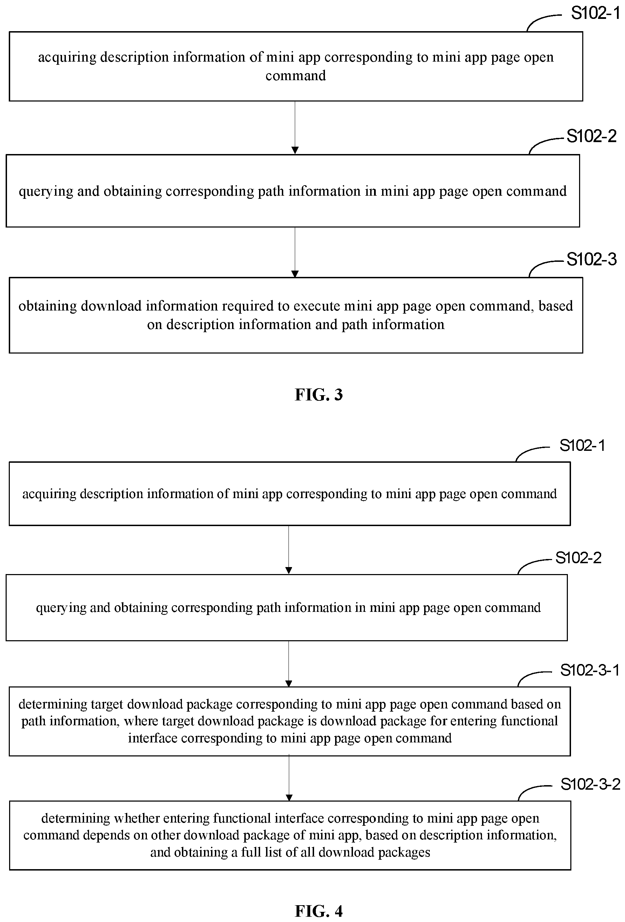

In one specific example of the solution of the present application, as shown in FIG. 3, in the step S102, after parsing the mini app page open command, the obtaining download information required to execute the mini app page open command, includes:
Step S102-1: acquiring description information of a mini app corresponding to the mini app page open command;
Step S102-2: querying and obtaining corresponding path information in the mini app page open command;
Step S102-3 : obtaining the download information required to execute the mini app page open command, based on the description information and the path information.

Here, the description information includes basic information such as a main package, a subpackage, an independent package and functional components in a dynamic library of the mini app, as well as association relationship information. The path information indicates a specific path for entering the functional interface corresponding to the mini app page open command. For example, the subpackage or independent subpackage or functional components corresponding to the mini app page open command may be obtained based on the path information; then, all download information for entering the function interface corresponding to the mini app page open command is obtained in combination with the association relationship information between the subpackage, independent subpackage, main package in the description information, which lays foundation for subsequent effective and efficient mini app pre-downloading.

In this way, with the description information of the mini app and the corresponding path information in the mini app page open command, all the download information required to execute the mini app page open command can be accurately acquired, which lays foundation for subsequently performing an effective and efficient mini app pre-downloading. Meanwhile, it also lays foundation for solving the problem of resource waste caused by useless downloads, thereby laying a foundation for improving the user experience.

According to the invention, after the server parses the mini app page open command, the download information is obtained in the following way, which specifically includes: parsing the mini app page open command to determine a target download package corresponding to the mini app page open command, where the target download package is a download package for entering the functional interface corresponding to the mini app page open command; then, determining a full list of all download packages required to execute the mini app page open command, based on whether entering the functional interface corresponding to the mini app page open command depends on other download package of the mini app. According to the invention, the target download package is an independent subpackage that can run independently, or is a subpackage that runs depending on a main package, or is a main package. Thus, in order to be able to accurately determine whether it is necessary to download other packages in addition to the target download package, it is further necessary to determine whether entering the functional interface corresponding to the mini app page open command depends on other download package of the mini app, i.e., determining whether operation of the target download package depends on other package. In this way, an accurate total download list is obtained, thereby achieving efficient and effective pre-downloading, avoiding the problem of resource waste caused by useless downloads and then improving the user experience.

In another specific example, as shown in FIG. 4, after parsing the mini app page open command, acquiring description information of a mini app corresponding to the mini app page open command and querying and obtaining corresponding path information in the mini app page open command, following steps are performed.

Step S102-3-1: determining a target download package corresponding to the mini app page open command based on the path information, where the target download package is a download package for entering the functional interface corresponding to the mini app page open command;

Step S 102-3-2: determining whether entering the functional interface corresponding to the mini app page open command depends on other download package of the mini app based on the description information, i.e., determining whether operation of the target download package depends on other package based on the description information, and obtaining a full list of all download packages.

In this way, efficient and effective pre-downloading is achieved, the problem of resource waste caused by useless downloads can be avoided, and then the user experience is improved.

According to the invention, the full list of all download packages includes download information corresponding to the target download package; or the full list of all download packages includes download information corresponding to the target download package, and download information corresponding to a main download package of the mini app. In other words, when determining that entering the functional interface corresponding to the mini app page open command depends on other download package of the mini app, the full list of all download packages is generated based on download information of all download packages that have dependencies, thereby ensuring that the electronic device corresponding to the host application downloads in advance all download packages in the full list of all download packages, so that the user can quickly enter the functional interface corresponding to the mini app page open command. As a result, the user experience is improved. Otherwise, when determining that entering the functional interface corresponding to the mini app page open command does not depend on other download package of the mini app, the target download package is directly taken as download content in the full list of all download packages. At this point, the electronic device corresponding to the host application only needs to download in advance the target download package, so that the functional interface corresponding to the mini app page open command can be quickly entered. In this way, quickly entering the functional interface corresponding to the mini app page open command can be achieved. Further, comparing with the existing solution of downloading the main package, the problem of resource waste caused by useless downloads can be avoided. For example, according to the solution of the present application, when the target download package is an independent subpackage, it is only needed to download the target download package, and there is no need to download the main package.

In one specific example of the solution of the present application, in order to ensure that the functional components in the mini app are the latest version, such as ensuring that they can be updated in time with updated version of the functional components in the dynamic library, the solution of the present application further includes: acquiring installation version information of the functional components of the mini app in the host application; determining whether to update the functional components of the mini app based on the installation version information. In other words, for one host application installed with a mini app, it is further necessary to use the electronic device corresponding to the host application to acquire the installation version information of each functional component in the mini app, for example, acquiring the installation version information regularly. Then, the server matches the acquired installation version information of each functional component in the mini app with version information of each functional component in the mini app stored by itself. And then, after determining that the functional components of the mini app in the host application are not the latest version, the functional components of the mini app are updated. In this way, it can ensure that the latest version of the functional components can be perceived by the user in a timely manner to avoid damage to the user experience.

In this way, in the solution of the present application, the server can obtain all the download information required to execute the mini app page open command based on the mini app page open command, and send all the download information required to execute the mini app page open command to the host application for the host application to perform mini app pre-download. Therefore, the existing problem of long waiting time due to not pre-downloading the subpackages and the like has been solved, and thus the user experience has been improved. Meanwhile, since the problem of poor functional experience of the mini app caused by the introduction of dynamic components has been solved, it has laid a foundation for the wide promotion of dynamic building capabilities, thereby laying a foundation for improving efficiency of mini app development and iteration.

Further, since the solution of the present application can accurately determine all the download information required to execute the mini app page open command, it solves the problem of resource waste of requesting and downloading main package caused by the existing pre-downloading main package, thereby laying a foundation for saving download resources and operation resources in the electronic device of the user.

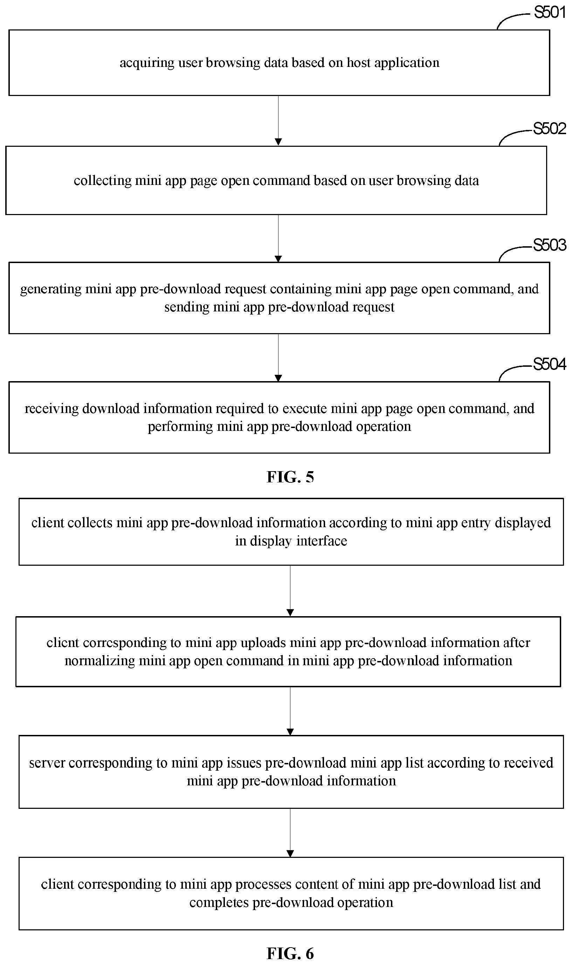

The solution of the present application further provides a mini app processing method. As shown in FIG. 5, the method includes steps S501-S504.

Step S501: user browsing data is acquired based on a host application by an electronic device.

Step S502: a mini app page open command is collected based on the user browsing data by the electronic device.

Step S503: a mini app pre-download request containing the mini app page open command is generated and the mini app pre-download request is sent by the electronic device.

Step S504: download information required to execute the mini app page open command is received and a mini app pre-download operation is performed by the electronic device.

In this way, in the solution of the present application, the electronic device can acquire all the download information required to execute the mini app page open command, and perform the mini app pre-download operation based on the download information. Therefore, the existing problem of long waiting time due to not pre-downloading the subpackages and the like has been solved, and thus the user experience has been improved.

In one specific example of the solution of the present application, the collecting a mini app page open command based on the user browsing data, includes: entering an information display interface based on the user browsing data, where the information display interface at least displays a mini app entry interface; based on the mini app entry interface, collecting the mini app page open command. In other words, the electronic device directly grabs the mini app page open command corresponding to the mini app entry interface in the information display interface entered based on the user browsing data, thereby efficiently and quickly acquiring a functional interface that the user may enter. The functional interface may be a main interface or other interfaces of the mini app, which can be acquired by the solution of the present application, thereby laying a foundation for subsequent effective acquisition of all download information. Further, the process is simple and feasible, the electronic device only needs to grab information and directly report it to the server without analysis and processing, thereby achieving efficient and effective pre-downloading and then laying a foundation for large-scale engineering applications.

Here, it should be noted that in actual applications of smart devices, some application may be used as a parent program to run one or more subprograms. The subprogram may be a mini app described in the solution of the present application, and the parent program may be the host application described in the solution of the present application. The mini app cannot run independently and needs to run depending on the parent program. For example, the mini app is integrated into the host application in the form of a software development kit SDK.

The solution of the present application is described in details hereinafter in combination with specific application scenarios.

This example expands capabilities of an existing mini app pre-download interface, adds a complete invoking agreement of an interface to be opened in the mini app pre-download interface, and introduces a dependency analysis mechanism on a mini app package management server (i.e., the foregoing server side). Then, all the necessary requirements of a page that a user is about to open (i.e., the function interface corresponding to the mini app page open command), including dynamic components (such as subpackage or other functional components), etc. are combined and distributed. Therefore, the technical problems of long waiting time due to not pre-downloading the subpackages and the like and inability to update in time and effectively in the existing technical solutions have been solved.. Meanwhile, the solution of the present application provides a general solution that the host application and a mini app server can flexibly extend support for dynamic capabilities of the mini app, thereby completely solving the dilemma that the existing pre-download solution can only support the download of the main package but cannot be extended, which can effectively facilitate high-speed iteration of the dynamic capabilities of mini app services.

Specifically, as shown in FIG. 6, steps of the pre-download mechanism for the mini app package associated component are as follows:
Step 1: a client (i.e., a host application) corresponding to a mini app collects mini app pre-download information according to a mini app entry, for example, a mini app entry displayed in a display interface. The mini app pre-download information may specifically include a mini app open command (i.e., a mini app page open command). For example, the existing mini app pre-download interface is extended, and the mini app pre-download information is organized in form of JSON objects, so that the entire mini app pre-download interface is in the form of an object array. The JSON structure is shown in the following format:

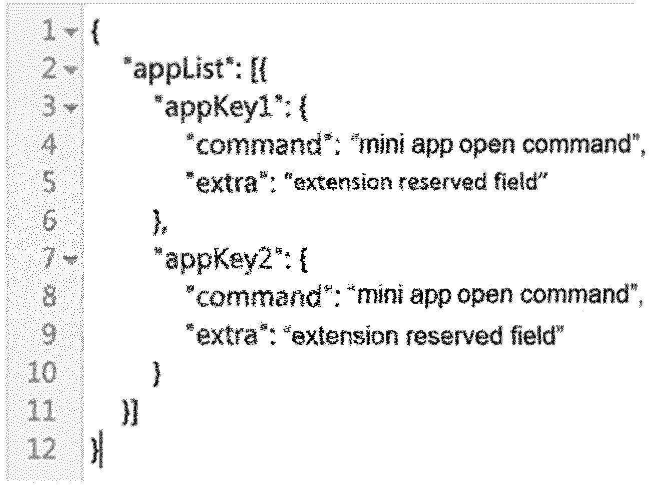

AppList is a collected mini app pre-downloaded list, AppList takes a value of an object array, and each object in the object array is a pre-downloaded mini app item, which may be represented by a unique identifier (such as AppKey) of the mini app. Here, in order to be able to extend effectively later, it may further set an extension reserved field. After collecting the mini app pre-download information, the above information is transparently transmitted by calling a mini app pre-download API.

Step 2: the client corresponding to the mini app uploads the mini app pre-download information.

Specifically, the foregoing information is carried in uplink parameters of an existing mini app pre-download client-server (C-S) package interface for the server to acquire. Here, mini app object information in the uplink parameters includes package information of each mini app stored locally on the current client, such as: 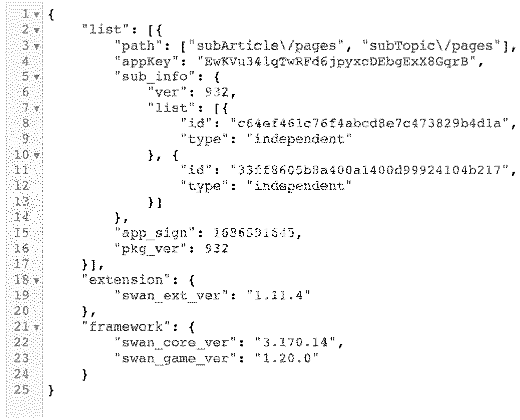 Wherein,
The list object records current versions of all associated components of the client;
AppKey is used to determine a specific mini app; path is used to record a specific mini app page that triggers pre-download, that is, the functional interface corresponding to the mini app page open command;
sub_info is a version of each dynamic component stored locally on the current client for the server to identify whether an update behavior needs to be triggered;
Extension and framework are version numbers of a mini app extension framework and a mini app running framework, for the server to select a mini app version that can operate in the current framework version.

Here, it is particularly necessary to normalize the mini app open command received in the step 1. Here, the mini app open command carries an open path field. For example, path information is acquired through Baidu App mini app open protocol baiduboxapp://swan/appKey/path?query. In this way, it is convenient for the server to parse and obtain related packages, such as subpackages, functional component packages.

Step 3: the server corresponding to the mini app issues a pre-download mini app list according to the received mini app pre-download information, where the pre-download mini app list contains basic description information.

Specifically, the server receives and parses the mini app pre-download list, starts to traverse the list, and finds a corresponding mini app package according to AppKey in each item in the list. According to path information in a mini app open protocol corresponding to AppKey in combination with analyzing app.j son description information in the mini app package, the following contents are determined:
determining whether the mini app uses a subpackage;
determining whether the mini app uses an independent subpackage;
determining whether the mini app uses a functional component in the dynamic library;
determining whether the mini app refers to other dynamic content, which can be downloaded associatively.

Meanwhile, the server further needs to acquire the version information of the corresponding component in the current mini app of the client, and determine version information of the subpackage, independent subpackage, and functional components in the dynamic library in a mini app open protocol corresponding to AppKey, or other associated components, is the latest version, such as matching with the corresponding version information in the server.

In a case that the versions are consistent, empty content is returned, or it is prompted that the current component version is the latest.

In a case that the versions are inconsistent, the server queries corresponding latest component information and returns at least the following information: a version number of a component, a download address of content delivery network (CDN) corresponding to the component, and other basic description information of the component, such as name and configuration, etc. of the component.

In this way, the above determined information is merged into a unified list in order and returned to the client.

Step 4: the client corresponding to the mini app processes content of the mini app pre-download list and completes a pre-download operation. Specifically, the client corresponding to the mini app pre-downloads the corresponding component according to a result returned by the server. In this way, when the user opens the mini app based on the mini app entry, the corresponding function interface will be directly entered without waiting for download.

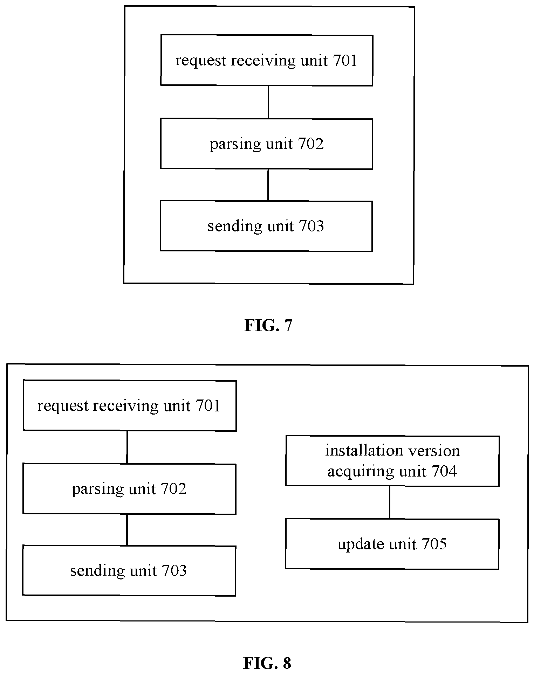

According to one embodiment of the present application, the present application further provides a server, as shown in FIG. 7, including:
a request receiving unit 701 configured for receiving a mini app pre-download request sent by a host application, where the mini app pre-download request is generated by the host application based on user browsing data, and at least includes a mini app page open command;
a parsing unit 702 configured for parsing the mini app page open command, and obtaining download information required to execute the mini app page open command; and
a sending unit 703 configured for sending the download information to the host application for the host application to perform mini app pre-download.

In one specific example of the solution of the present application, the parsing unit 702 includes:
an acquiring subunit configured for acquiring description information of a mini app corresponding to the mini app page open command;
a query subunit configured for querying and obtaining corresponding path information in the mini app page open command; and
a first information determining subunit configured for obtaining the download information required to execute the mini app page open command based on the description information and the path information.

In one specific example of the solution of the present application, the parsing unit 702 includes:
a second information determining subunit configured for determining a target download package corresponding to the mini app page open command, where the target download package is a download package for entering the functional interface corresponding to the mini app page open command; and
a judging subunit configured for determining a full list of all download packages required to execute the mini app page open command based on whether entering the functional interface corresponding to the mini app page open command depends on other download package of the mini app.

In one specific example of the solution of the present application, the full list of all download packages includes download information corresponding to the target download package; or
the full list of all download packages includes download information corresponding to the target download package and download information corresponding to a main download package of the mini app.

In one specific example of the solution of the present application, as shown in FIG. 8, the server further includes:
an installation version acquiring unit 704 configured for acquiring installation version information of a functional component of the mini app in the host application; and
an update unit 705 configured for determining whether to update the functional component of the mini app based on the installation version information.

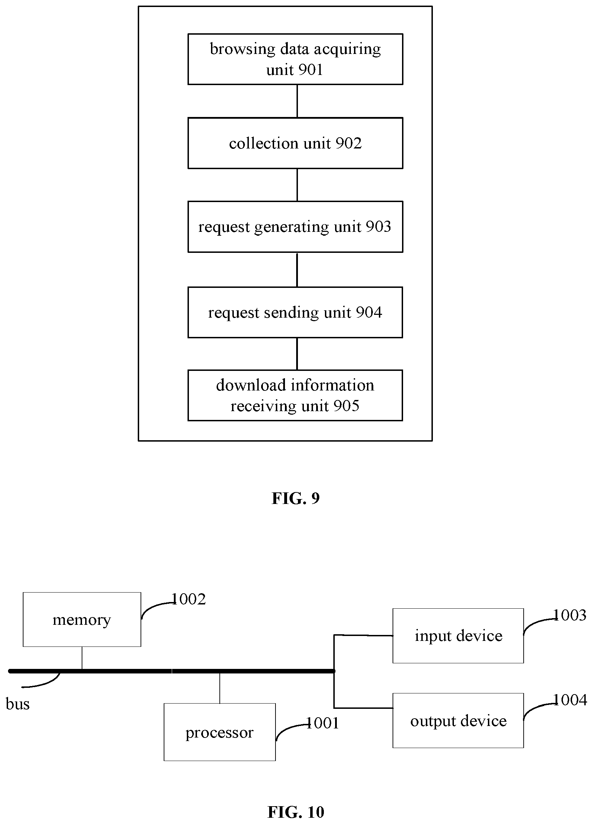

According to one embodiment of the present application, the present application further provides an electronic device, as shown in FIG. 9, including:
a browsing data acquiring unit 901 configured for acquiring user browsing data based on a host application;
a collection unit 902 configured for collecting a mini app page open command based on the user browsing data;
a request generating unit 903 configured for generating a mini app pre-download request containing the mini app page open command;
a request sending unit 904 configured for sending the mini app pre-download request; and
a download information receiving unit 905 configured for receiving download information required to execute the mini app page open command, and performing a mini app pre-download operation.

In one specific example of the solution of the present application, the collection unit 902 includes:
an interface display subunit configured for entering an information display interface based on the user browsing data, where the information display interface at least displays a mini app entry interface; and
a collection subunit configured for collecting the mini app page open command based on the mini app entry interface.

According to embodiments of the present application, the present application further provides a server, an electronic device, and a readable storage medium.

FIG. 10 is a block diagram of an electronic device for a mini app processing method according to an embodiment of the present application. Here, it should be noted that a server corresponding to the mini app processing method is similar to the electronic device in practical applications. For simplicity, the solution of the present application only describes the electronic device in detail, and the server may be understood by referring to the electronic device.

Specifically, as shown in FIG. 10, the electronic device is intended to represent various forms of digital computers, such as laptop computers, desktop computers, workstations, personal digital assistants, servers, blade servers, mainframe computers, and other suitable computers. The electronic device may further represent various forms of mobile devices, such as personal digital processing, cellular telephones, smart phones, wearable devices, and other similar computing devices. The components shown herein, their connections and relationships, and their functions are by way of example only and are not intended to limit the implementations of the present application described and/or claimed herein.

As shown in FIG. 10, the electronic device includes: one or more processors 1001, a memory 1002, and interfaces for connecting various components, including high-speed interfaces and low-speed interfaces. The various components are interconnected using different buses and may be mounted on a common motherboard or otherwise as desired. The processor may process instructions for execution within the electronic device, including instructions stored in the memory or on the memory to display graphical information of a Graphical User Interface (GUI) on an external input/output device, such as a display device coupled to the interface. In other embodiments, multiple processors and/or multiple buses and multiple memories may be used with multiple memories if desired. Similarly, multiple electronic devices may be connected, each providing part of the necessary operations (e.g., as an array of servers, a set of blade servers, or a multiprocessor system). In FIG. 10, one processor 1001 is taken as an example.

The memory 1002 is a non-transitory computer-readable storage medium provided herein. The memory stores instructions executable by at least one processor to enable the at least one processor to implement the mini app processing method provided herein. The non-transitory computer-readable storage medium of the present application stores computer instructions for enabling a computer to implement the mini app processing method provided herein.

The memory 1002, as a non-transitory computer-readable storage medium, may be used to store non-transitory software programs, non-transitory computer-executable programs, and modules, such as program instructions/modules (e.g., the browsing data acquiring unit 901, the collection unit 902, the request generating unit 903, the request sending unit 904 and the download information receiving unit 905 shown in FIG. 9; here, for the server, program instructions/modules corresponding to the mini app processing method may include, for example, the request receiving unit 701, the parsing unit 702, the sending unit 703, the installation version acquiring unit 704 and the update unit 705 shown in FIG. 8) corresponding to the mini app processing method of embodiments of the present application. The processor 1001 executes various functional applications of the server and data processing, i.e., the mini app processing method in the above-mentioned method embodiment, by operating non-transitory software programs, instructions, and modules stored in the memory 1002.

The memory 1002 may include a program storage area and a data storage area, wherein the program storage area may store an application program required by an operating system and at least one function; the data storage area may store data created according to the use of the electronic device for the mini app processing method, etc. In addition, the memory 1002 may include a high speed random access memory, and may also include a non-transitory memory, such as at least one magnetic disk storage device, a flash memory device, or other non-transitory solid state memory device. In some embodiments, the memory 1002 may optionally include memories remotely located with respect to processor 1001, which may be connected via a network to the electronic device for the mini app processing method. Examples of such networks include, but are not limited to, the Internet, intranet, local area networks, mobile communication networks, and combinations thereof.

The electronic device for the mini app processing method may further include: an input device 1003 and an output device 1004. The processor 1001, the memory 1002, the input device 1003, and the output device 1004 may be connected via a bus or otherwise. FIG. 10 takes a bus connection as an example.

The input device 1003 may receive input numeric or character information and generate key signal inputs related to user settings and functional controls of the electronic device for the mini app processing method, such as input devices including touch screens, keypads, mice, track pads, touch pads, pointing sticks, one or more mouse buttons, trackballs, joysticks, etc. The output device 1004 may include display devices, auxiliary lighting devices (e.g., LEDs), tactile feedback devices (e.g., vibration motors), and the like. The display device may include, but is not limited to, a Liquid Crystal Display (LCD), a Light Emitting Diode (LED) display, and a plasma display. In some embodiments, the display device may be a touch screen.

Various embodiments of the systems and techniques described herein may be implemented in digital electronic circuit systems, integrated circuit systems, Application Specific Integrated Circuits (ASICs), computer hardware, firmware, software, and/or combinations thereof. These various embodiments may include: implementation in one or more computer programs which can be executed and/or interpreted on a programmable system including at least one programmable processor, and the programmable processor may be a dedicated or general-purpose programmable processor which can receive data and instructions from, and transmit data and instructions to, a memory system, at least one input device, and at least one output device.

These computing programs (also referred to as programs, software, software applications, or codes) include machine instructions of a programmable processor, and may be implemented using high-level procedural and/or object-oriented programming languages, and/or assembly/machine languages. As used herein, the terms "machine-readable medium" and "computer-readable medium" refer to any computer program product, device, and/or apparatus (e.g., magnetic disk, optical disk, memory, programmable logic device (PLD)) for providing machine instructions and/or data to a programmable processor, including a machine-readable medium that receives machine instructions as machine-readable signals. The term "machine-readable signal" refers to any signal used to provide machine instructions and/or data to a programmable processor.

To provide an interaction with a user, the systems and techniques described herein may be implemented on a computer having: a display device (e.g., a Cathode Ray Tube (CRT) or Liquid Crystal Display (LCD) monitor) for displaying information to a user; and a keyboard and a pointing device (e.g., a mouse or a trackball) by which a user can provide input to the computer. Other types of devices may also be used to provide interaction with a user; for example, the feedback provided to the user may be any form of sensory feedback (e.g., visual feedback, audile feedback, or tactile feedback); and input from the user may be received in any form, including acoustic input, audio input, or tactile input.

The systems and techniques described herein may be implemented in a computing system that includes a background component (e.g., as a data server), or a computing system that includes a middleware component (e.g., an application server), or a computing system that includes a front-end component (e.g., a user computer having a graphical user interface or a web browser through which a user may interact with embodiments of the systems and techniques described herein), or in a computing system that includes any combination of such background component, middleware component, or front-end component. The components of the system may be interconnected by digital data communication (e.g., a communication network) of any form or medium. Examples of the communication network include: Local Area Networks (LANs), Wide Area Networks (WANs), and the Internet.

The computer system may include a client and a server. The client and the server are typically remote from each other and typically interact through a communication network. A relationship between the client and the server is generated by computer programs operating on respective computers and having a client-server relationship with each other. The server may be a cloud server, also referred to as a cloud computing server or a cloud host, which is a host product in the cloud computing service system to solve shortcomings of difficult management and weak business scalability in traditional physical hosts and VPS services.

In this way, in the solution of the present application, the server can obtain all the download information required to execute the mini app page open command based on the mini app page open command, and send all the download information required to execute the mini app page open command to the host application for the host application to perform mini app pre-download. Therefore, the existing problem of long waiting time due to not pre-downloading the subpackages and the like has been solved, and thus the user experience has been improved. Meanwhile, since the problem of poor functional experience of the mini app caused by the introduction of dynamic components has been solved, it has laid a foundation for the wide promotion of dynamic building capabilities, thereby laying a foundation for improving efficiency of mini app development and iteration.

Further, since the solution of the present application can accurately determine all the download information required to execute the mini app page open command, it solves the problem of resource waste of requesting and downloading main package caused by the existing pre-downloading main package, thereby laying a foundation for saving download resources and operation resources in the electronic device of the user.

It will be appreciated that the various forms of flow, reordering, adding or removing steps shown above may be used. For example, the steps recited in the present application may be performed in parallel or sequentially or may be performed in a different order, so long as the desired results of the technical solutions disclosed in the present application can be achieved, and no limitation is made herein.

The above-mentioned embodiments are not to be construed as limiting the scope of the present application. It will be apparent to a person skilled in the art that various modifications, combinations, sub-combinations and substitutions are possible, depending on design requirements and other factors.

## Claims

1. A mini app processing method, implemented by a server, comprising:
receiving (S101) a mini app pre-download request sent by a host application on an electronic device, wherein the mini app pre-download request is generated by the host application based on user browsing data, and comprises a mini app page open command; the mini app pre-download request is a request for downloading a mini app;
parsing (S102) the mini app page open command, and obtaining (S102) download information required to execute the mini app page open command; wherein the download information refers to a full list of all download packages required to execute the mini app page open command; and
sending (S103) the download information to the host application on the electronic device, such that the host application performs a mini app pre-download operation according to the download information;
wherein the obtaining (S102) the download information required to execute the mini app page open command comprises:
determining (S102-3-1) a target download package corresponding to the mini app page open command, wherein the target download package is a download package for entering a functional interface corresponding to the mini app page open command; and determining (S102-3-2) the full list of all download packages required to execute the mini app page open command, based on whether entering the functional interface corresponding to the mini app page open command depends on other download package of the mini app;
wherein in response to determining that entering the functional interface corresponding to the mini app page open command depends on other download package of the mini app, the full list of all download packages is generated based on the target download package and a download package that have a dependency with the target download package; and in response to determining that entering the functional interface corresponding to the mini app page open command does not depend on other download package of the mini app, taking the target download package as the full list of all download packages;
wherein the target download package comprises an independent subpackage, a subpackage or a main package;
wherein the independent subpackage runs independently and does not depend on running of the main package, and in response to entering the mini app from an interface corresponding to the independent subpackage, the independent subpackage is downloaded and the main package is not downloaded; and
wherein the dependency comprises: the subpackage runs depending on the main package, and in response to entering the mini app from an interface corresponding to the subpackage, both the main package and the subpackage are downloaded.

2. The method of claim 1, wherein the method further comprises: acquiring installation version information of a functional component of the mini app in the host application; and determining whether to update the functional component of the mini app based on the installation version information.

3. A mini app processing method, implemented by a host application on an electronic device, comprising:
acquiring (S501) user browsing data;
collecting (S502) a mini app page open command based on the user browsing data;
generating (S503) a mini app pre-download request containing the mini app page open command, and sending the mini app pre-download request to a server; wherein the mini app pre-download request is a request for downloading a mini app; and
receiving (S504) download information, sent by the server, required to execute the mini app page open command, and performing a mini app pre-download operation according to the download information; wherein the download information refers to a full list of all download packages required to execute the mini app page open command;
wherein the download information is obtained by the server comprises: a target download package corresponding to the mini app page open command is determined by the server, wherein the target download package is a download package for entering a functional interface corresponding to the mini app page open command; and the full list of all download packages required to execute the mini app page open command is determined by the server based on whether entering the functional interface corresponding to the mini app page open command depends on other download package of the mini app;
wherein in response to determining that entering the functional interface corresponding to the mini app page open command depends on other download package of the mini app, the full list of all download packages is generated based on the target download package and a download package that have a dependency with the target download package; and in response to determining that entering the functional interface corresponding to the mini app page open command does not depend on other download package of the mini app, taking the target download package as the full list of all download packages;
wherein the target download package comprises an independent subpackage, a subpackage or a main package;
wherein the independent subpackage runs independently and does not depend on running of the main package, and in response to entering the mini app from an interface corresponding to the independent subpackage, the independent subpackage is downloaded and the main package is not downloaded; and
wherein the dependency comprises: the subpackage runs depending on the main package, and in response to entering the mini app from an interface corresponding to the subpackage, both the main package and the subpackage are downloaded.

4. The method of claim 3, wherein the collecting a mini app page open command based on the user browsing data, comprises:
entering an information display interface based on the user browsing data, wherein the information display interface at least displays a mini app entry interface; and
collecting the mini app page open command based on the mini app entry interface.

5. A server, comprising:
a request receiving unit (701) configured for receiving a mini app pre-download request sent by a host application on an electronic device, wherein the mini app pre-download request is generated by the host application based on user browsing data, and comprises a mini app page open command; the mini app pre-download request is a request for downloading a mini app;
a parsing unit (702) configured for parsing the mini app page open command, and obtaining download information required to execute the mini app page open command; wherein the download information refers to a full list of all download packages required to execute the mini app page open command; and
a sending unit (703) configured for sending the download information to the host application on the electronic device, such that the host application performs a mini app pre-download operation according to the download information;
wherein the parsing unit (702) is configured to determine a target download package corresponding to the mini app page open command, wherein the target download package is a download package for entering a functional interface corresponding to the mini app page open command; and to determine the full list of all download packages required to execute the mini app page open command based on whether entering the functional interface corresponding to the mini app page open command depends on other download package of the mini app;
wherein in response to determining that entering the functional interface corresponding to the mini app page open command depends on other download package of the mini app, the full list of all download packages is generated based on the target download package and a download package that have a dependency with the target download package; and in response to determining that entering the functional interface corresponding to the mini app page open command does not depend on other download package of the mini app, the target download package is taken as the full list of all download packages;
wherein the target download package comprises an independent subpackage, a subpackage or a main package;
wherein the independent subpackage runs independently and does not depend on running of the main package, and in response to entering the mini app from an interface corresponding to the independent subpackage, the independent subpackage is downloaded and the main package is not downloaded; and
wherein the dependency comprises: the subpackage runs depending on the main package, and in response to entering the mini app from an interface corresponding to the subpackage, both the main package and the subpackage are downloaded.

6. The server of claim 5, further comprising:
an installation version acquiring unit (704) configured for acquiring installation version information of a functional component of the mini app corresponding to the mini app pre-download request in the host application; and
an update unit (705) configured for determining whether to update the functional component of the mini app based on the installation version information.

7. An electronic device, comprising:
a browsing data acquiring unit (901) configured for acquiring user browsing data;
a collection unit (902) configured for collecting a mini app page open command based on the user browsing data;
a request generating unit (903) configured for generating a mini app pre-download request containing the mini app page open command;
a request sending unit (904) configured for sending the mini app pre-download request to a server; wherein the mini app pre-download request is a request for downloading a mini app; and
a download information receiving unit (905) configured for receiving download information, sent by the server, required to execute the mini app page open command, and performing a mini app pre-download operation according to the download information; wherein the download information refers to a full list of all download packages required to execute the mini app page open command;
wherein the server is configured to: determine a target download package corresponding to the mini app page open command, wherein the target download package is a download package for entering a functional interface corresponding to the mini app page open command; and determine the full list of all download packages required to execute the mini app page open command, based on whether entering the functional interface corresponding to the mini app page open command depends on the other download of the mini app;
wherein in response to determining that entering the functional interface corresponding to the mini app page open command depends on other download package of the mini app, the full list of all download packages is generated based on the target download package and a download package that have a dependency with the target download package; and in response to determining that entering the functional interface corresponding to the mini app page open command does not depend on other download package of the mini app, the target download package is taken as the full list of all download packages;
wherein the target download package comprises an independent subpackage, a subpackage or a main package;
wherein the independent subpackage runs independently and does not depend on running of the main package, and in response to entering the mini app from an interface corresponding to the independent subpackage, the independent subpackage is downloaded and the main package is not downloaded; and
wherein the dependency comprises: the subpackage runs depending on the main package, and in response to entering the mini app from an interface corresponding to the subpackage, both the main package and the subpackage are downloaded.

8. The electronic device of claim 7, wherein the collection unit comprises:
an interface display subunit configured for entering an information display interface based on the user browsing data, wherein the information display interface at least displays a mini app entry interface; and
a collection subunit configured for collecting the mini app page open command based on the mini app entry interface.

9. A non-transitory computer-readable storage medium storing computer instructions for causing the computer to perform the method of any one of claims 1 to 2, or to perform the method of any one of claims 3 to 4.

10. A computer program product comprising computer program instructions, the computer program instructions, when executed by a computer, cause the computer to perform the method according to any one of claims 1 to 2, or to perform the method of any one of claims 3 to 4.

## Patentansprüche

1. Mini-App-Verarbeitungsverfahren, welches mittels eines Servers ausgeführt wird, aufweisend:
Empfangen (S101) einer Mini-App-Vorab-Download-Anfrage, welche mittels einer Host-Anwendung auf einer elektronischen Vorrichtung gesendet wird, wobei die Mini-App-Vorab-Download-Anfrage mittels der Host-Anwendung basierend auf Benutzer-Browsing-Daten erstellt wird und einen Mini-App-Seite-Öffnen-Befehl aufweist; wobei die Mini-App-Vorab-Download-Anfrage eine Anfrage zum Herunterladen einer Mini-App ist;
Parsen (S102) des Mini-App-Seite-Öffnen-Befehls, und Erlangen (S102) von Download-Informationen, welche benötigt werden, um den Mini-App-Seite-Öffnen-Befehl auszuführen; wobei die Download-Informationen eine vollständige Liste aller Download-Pakete betreffen, welche benötigt werden, um den Mini-App-Seite-Öffnen-Befehl auszuführen; und
Senden (S103) der Download-Informationen zu der Host-Anwendung auf der elektronischen Vorrichtung derart, dass die Host-Anwendung einen Mini-App-Vorab-Download-Vorgang gemäß den Download-Informationen durchführt;
wobei das Erlangen (S102) der Download-Informationen, welche benötigt werden, um den Mini-App-Seite-Öffnen-Befehl auszuführen, aufweist:
Ermitteln (S102-3-1) eines Ziel-Download-Pakets, welches mit dem Mini-App-Seite-Öffnen-Befehl korrespondiert, wobei das Ziel-Download-Paket ein Download-Paket zum Zugreifen auf eine funktionale Schnittstelle ist, welche mit dem Mini-App-Seite-Öffnen-Befehl korrespondiert; und Ermitteln (S102-3-2) der vollständigen Liste aller Download-Pakete, welche zum Ausführen des Mini-App-Seite-Öffnen-Befehls benötigt werden, basierend darauf, ob das Zugreifen auf die funktionale Schnittstelle, welche mit dem Mini-App-Seite-Öffnen-Befehl korrespondiert, von einem anderen Download-Paket der Mini-App abhängt;
wobei in Reaktion auf das Ermitteln, dass das Zugreifen auf die funktionale Schnittstelle, welche mit dem Mini-App-Seite-Öffnen-Befehl korrespondiert, von einem anderen Download-Paket der Mini-App abhängt, die vollständige Liste aller Download-Pakete basierend auf dem Ziel-Download-Paket und einem Download-Paket, welches eine Abhängigkeit mit dem Ziel-Download-Paket hat, erstellt wird; und in Reaktion auf das Ermitteln, dass das Zugreifen auf die funktionale Schnittstelle, welche mit dem Mini-App-Seite-Öffnen-Befehl korrespondiert, nicht von einem anderen Download-Paket der Mini-App abhängt, Nehmen des Ziel-Download-Pakets als die vollständige Liste aller Download-Pakete;
wobei das Ziel-Download-Paket ein unabhängiges Unterpaket, ein Unterpaket oder ein Hauptpaket aufweist;
wobei das unabhängige Unterpaket unabhängig läuft und nicht von dem Laufen des Hauptpakets abhängt, und
wobei in Reaktion auf das Zugreifen auf die Mini-App von einer Schnittstelle aus, welche mit dem unabhängigen Unterpaket korrespondiert, das unabhängige Unterpaket heruntergeladen wird und das Hauptpaket nicht heruntergeladen wird; und
wobei die Abhängigkeit aufweist: das Unterpaket läuft abhängig von dem Hauptpaket, und
wobei in Reaktion auf das Zugreifen auf die Mini-App von einer Schnittstelle aus, welche mit dem Unterpaket korrespondiert, sowohl das Hauptpaket als auch das Unterpaket heruntergeladen werden.

2. Verfahren gemäß Anspruch 1, wobei das Verfahren ferner aufweist: Beziehen von Installation-Version-Informationen einer funktionalen Komponente der Mini-App in der Host-Anwendung; und Ermitteln, ob die funktionale Komponente der Mini-App aktualisiert werden soll, basierend auf den Installation-Version-Informationen.

3. Mini-App-Verarbeitungsverfahren, welches mittels einer Host-Anwendung auf einer elektronischen Vorrichtung ausgeführt wird, aufweisend:
Beziehen (S501) von Benutzer-Browsing-Daten;
Einsammeln (S502) eines Mini-App-Seite-Öffnen-Befehls basierend auf den Benutzer-Browsing-Daten;
Erstellen (S503) einer Mini-App-Vorab-Download-Anfrage, welche den Mini-App-Seite-Öffnen-Befehl enthält, und Senden der Mini-App-Vorab-Download-Anfrage zu einem Server;
wobei die Mini-App-Vorab-Download-Anfrage eine Anfrage zum Herunterladen einer Mini-App ist; und
Empfangen (S504) von Download-Informationen, welche mittels des Servers gesendet werden und welche benötigt werden, um den Mini-App-Seite-Öffnen-Befehl auszuführen, und Durchführen eines Mini-App-Vorab-Download-Vorgangs gemäß den Download-Informationen;
wobei die Download-Informationen eine vollständige Liste aller Download-Pakete betreffen, welche benötigt werden, um den Mini-App-Seite-Öffnen-Befehl auszuführen;
wobei die Download-Informationen, welche mittels des Servers erlangt werden, aufweisen: ein Ziel-Download-Paket, welches mit dem Mini-App-Seite-Öffnen-Befehl korrespondiert, wird mittels des Servers ermittelt, wobei das Ziel-Download-Paket ein Download-Paket zum Zugreifen auf eine funktionale Schnittstelle ist, welche mit dem Mini-App-Seite-Öffnen-Befehl korrespondiert; und die vollständige Liste aller Download-Pakete, welche benötigt werden, um den Mini-App-Seite-Öffnen-Befehl auszuführen, mittels des Servers basierend darauf ermittelt wird, ob das Zugreifen auf die funktionale Schnittstelle, welche mit dem Mini-App-Seite-Öffnen-Befehl korrespondiert, von einem anderen Download-Paket der Mini-App abhängt;
wobei in Reaktion auf das Ermitteln, dass das Zugreifen auf die funktionale Schnittstelle, welche mit dem Mini-App-Seite-Öffnen-Befehl korrespondiert, von einem anderen Download-Paket der Mini-App abhängt, die vollständige Liste aller Download-Pakete basierend auf dem Ziel-Download-Paket und einem Download-Paket, welches eine Abhängigkeit mit dem Ziel-Download-Paket hat, erstellt wird; und in Reaktion auf das Ermitteln, dass das Zugreifen auf die funktionale Schnittstelle, welche mit dem Mini-App-Seite-Öffnen-Befehl korrespondiert, nicht von einem anderen Download-Paket der Mini-App abhängt, Nehmen des Ziel-Download-Pakets als die vollständige Liste aller Download-Pakete;
wobei das Ziel-Download-Paket ein unabhängiges Unterpaket, ein Unterpaket oder ein Hauptpaket aufweist;
wobei das unabhängige Unterpaket unabhängig läuft und nicht von dem Laufen des Hauptpakets abhängt, und
wobei in Reaktion auf das Zugreifen auf die Mini-App von einer Schnittstelle aus, welche mit dem unabhängigen Unterpaket korrespondiert, das unabhängige Unterpaket heruntergeladen wird und das Hauptpaket nicht heruntergeladen wird; und
wobei die Abhängigkeit aufweist: das Unterpaket läuft abhängig von dem Hauptpaket, und
wobei in Reaktion auf das Zugreifen auf die Mini-App von einer Schnittstelle aus, welche mit dem Unterpaket korrespondiert, sowohl das Hauptpaket als auch das Unterpaket heruntergeladen werden.

4. Verfahren gemäß Anspruch 3, wobei das Einsammeln eines Mini-App-Seite-Öffnen-Befehls basierend auf den Benutzer-Browsing-Daten aufweist:
Zugreifen auf eine Information-Anzeige-Schnittstelle basierend auf den Benutzer-Browsing-Daten, wobei die Information-Anzeige-Schnittstelle zumindest eine Mini-App-Zugriff-Schnittstelle anzeigt; und
Einsammeln des Mini-App-Seite-Öffnen-Befehls basierend auf der Mini-App-Zugriff-Schnittstelle.

5. Server, aufweisend:
eine Anfrage-Empfangseinheit (701), welche konfiguriert ist, zum Empfangen von einer Mini-App-Vorab-Download-Anfrage, welche mittels einer Host-Anwendung auf einer elektronischen Vorrichtung gesendet ist, wobei die Mini-App-Vorab-Download-Anfrage mittels der Host-Anwendung basierend auf Benutzer-Browsing-Daten erstellt ist, und einen Mini-App-Seite-Öffnen-Befehl aufweist; wobei die Mini-App-Vorab-Download-Anfrage eine Anfrage zum Herunterladen einer Mini-App ist;
eine Parsen-Einheit (702), welche konfiguriert ist zum Parsen des Mini-App-Seite-Öffnen-Befehls und zum Erlangen von Download-Informationen, welche benötigt werden, um den Mini-App-Seite-Öffnen-Befehl auszuführen; wobei die Download-Informationen eine vollständige Liste aller Download-Pakete betreffen, welche benötigt werden, um den Mini-App-Seite-Öffnen-Befehl auszuführen;
und
eine Sendeeinheit (703), welche konfiguriert ist zum Senden der Download-Informationen zu der Host-Anwendung auf der elektronischen Vorrichtung derart, dass die Host-Anwendung einen Mini-App-Vorab-Download-Vorgang gemäß den Download-Informationen durchführt;
wobei die Parsen-Einheit (702) konfiguriert ist, um ein Ziel-Download-Paket zu ermitteln, welches mit dem Mini-App-Seite-Öffnen-Befehl korrespondiert, wobei das Ziel-Download-Paket ein Download-Paket zum Zugreifen auf eine funktionale Schnittstelle ist, welche mit dem Mini-App-Seite-Öffnen-Befehl korrespondiert; und um die vollständige Liste aller Download-Pakete zu ermitteln, welche benötigt werden, um den Mini-App-Seite-Öffnen-Befehl auszuführen, basierend darauf, ob das Zugreifen auf die funktionale Schnittstelle, welche mit dem Mini-App-Seite-Öffnen-Befehl korrespondiert, von einem anderen Download-Paket der Mini-App abhängt;
wobei in Reaktion auf das Ermitteln, dass das Zugreifen auf die funktionale Schnittstelle, welche mit dem Mini-App-Seite-Öffnen-Befehl korrespondiert, von einem anderen Download-Paket der Mini-App abhängt, die vollständige Liste aller Download-Pakete basierend auf dem Ziel-Download-Paket und einem Download-Paket, welches eine Abhängigkeit mit dem Ziel-Download-Paket hat, erstellt wird; und in Reaktion auf das Ermitteln, dass das Zugreifen auf die funktionale Schnittstelle, welche mit dem Mini-App-Seite-Öffnen-Befehl korrespondiert, nicht von einem anderen Download-Paket der Mini-App abhängt, das Ziel-Download-Paket als die vollständige Liste aller Download-Pakete genommen wird;
wobei das Ziel-Download-Paket ein unabhängiges Unterpaket, ein Unterpaket oder ein Hauptpaket aufweist;
wobei das unabhängige Unterpaket unabhängig läuft und nicht von dem Laufen des Hauptpakets abhängt, und
wobei in Reaktion auf das Zugreifen auf die Mini-App von einer Schnittstelle aus, welche mit dem unabhängigen Unterpaket korrespondiert, das unabhängige Unterpaket heruntergeladen wird und das Hauptpaket nicht heruntergeladen wird; und
wobei die Abhängigkeit aufweist: das Unterpaket läuft abhängig von dem Hauptpaket, und
wobei in Reaktion auf das Zugreifen auf die Mini-App von einer Schnittstelle aus, welche mit dem Unterpaket korrespondiert, sowohl das Hauptpaket als auch das Unterpaket heruntergeladen werden.

6. Server gemäß Anspruch 5, ferner aufweisend:
eine Installation-Version-Beziehen-Einheit (704), welche konfiguriert ist, zum Beziehen von Installation-Version-Informationen einer funktionalen Komponente der Mini-App, welche mit der Mini-App-Vorab-Download-Anfrage in der Host-Anwendung korrespondieren; und
eine Aktualisierungseinheit (705), welche konfiguriert ist zum Ermitteln, ob die funktionale Komponente der Mini-App aktualisiert werden soll, basierend auf den Installation-Version-Informationen.

7. Elektronische Vorrichtung, aufweisend:
eine Browsing-Daten-Beziehen-Einheit (901), welche konfiguriert ist zum Beziehen von Benutzer-Browsing-Daten;
eine Einsammeleinheit (902), welche konfiguriert ist zum Einsammeln eines Mini-App-Seite-Öffnen-Befehl basierend auf den Benutzer-Browsing-Daten;
eine Anfrage-Erstelleinheit (903), welche konfiguriert ist zum Erstellen einer Mini-App-Vorab-Download-Anfrage, welche den Mini-App-Seite-Öffnen-Befehl enthält;
eine Anfrage-Sendeeinheit (904), welche konfiguriert ist zum Senden der Mini-App-Vorab-Download-Anfrage zu einem Server; wobei die Mini-App-Vorab-Download-Anfrage eine Anfrage zum Herunterladen einer Mini-App ist; und
eine Download-Information-Empfangseinheit (905), welche konfiguriert ist zum Empfangen von Download-Informationen, welche mittels des Servers gesendet sind und welche benötigt werden zum Ausführen des Mini-App-Seiten-Öffnen-Befehls, und zum Durchführen eines Mini-App-Vorab-Download-Vorgangs gemäß den Download-Informationen; wobei die Download-Informationen eine vollständige Liste aller Download-Pakete betreffen, welche benötigt werden zum Ausführen des Mini-App-Seite-Öffnen-Befehls;
wobei der Server konfiguriert ist, um: ein Ziel-Download-Paket zu ermitteln, welches mit dem Mini-App-Seite-Öffnen-Befehl korrespondiert, wobei das Ziel-Download-Paket ein Download-Paket zum Zugreifen auf eine funktionale Schnittstelle ist, welche mit dem Befehl zum Mini-App-Seite-Öffnen-Befehl korrespondiert; und die vollständige Liste aller Download-Pakete zu ermitteln, welche benötigt werden, um den Mini-App-Seite-Öffnen-Befehl auszuführen, basierend darauf, ob das Zugreifen auf die funktionale Schnittstelle, welche mit dem Mini-App-Seite-Öffnen-Befehl korrespondiert, von dem anderen Download der Mini-App abhängt;
wobei in Reaktion auf das Ermitteln, dass das Zugreifen auf die funktionale Schnittstelle, welche mit dem Mini-App-Seite-Öffnen-Befehl korrespondiert, von einem anderen Download-Paket der Mini-App abhängt, die vollständige Liste aller Download-Pakete basierend auf dem Ziel-Download-Paket und einem Download-Paket, welches eine Abhängigkeit mit dem Ziel-Download-Paket hat, erstellt wird; und in Reaktion auf das Ermitteln, dass das Zugreifen auf die funktionale Schnittstelle, welche mit dem Mini-App-Seite-Öffnen-Befehl korrespondiert, nicht von einem anderen Download-Paket der Mini-App abhängt, wird das Ziel-Download-Paket als die vollständige Liste aller Download-Pakete genommen;
wobei das Ziel-Download-Paket ein unabhängiges Unterpaket, ein Unterpaket oder ein Hauptpaket aufweist;
wobei das unabhängige Unterpaket unabhängig läuft und nicht von dem Laufen des Hauptpakets abhängt, und
wobei in Reaktion auf das Zugreifen auf die Mini-App von einer Schnittstelle aus, welche mit dem unabhängigen Unterpaket korrespondiert, das unabhängige Unterpaket heruntergeladen wird und das Hauptpaket nicht heruntergeladen wird; und
wobei die Abhängigkeit aufweist: das Unterpaket läuft abhängig von dem Hauptpaket, und
wobei in Reaktion auf das Zugreifen auf die Mini-App von einer Schnittstelle aus, welche mit dem Unterpaket korrespondiert, sowohl das Hauptpaket als auch das Unterpaket heruntergeladen werden.

8. Elektronische Vorrichtung gemäß Anspruch 7, wobei die Einsammeleinheit aufweist:
eine Schnittstelle-Anzeige-Untereinheit, welche konfiguriert ist zum Zugreifen auf eine Information-Anzeige-Schnittstelle basierend auf den Benutzer-Browsing-Daten, wobei die Information-Anzeige-Schnittstelle zumindest eine Mini-App-Zugriff-Schnittstelle anzeigt; und
eine Einsammel-Untereinheit, welche konfiguriert ist zum Einsammeln des Mini-App-Seite-Öffnen-Befehls basierend auf der Mini-App-Zugriff-Schnittstelle.

9. Nichtflüchtiges computerlesbares Speichermedium, welches Computerbefehle speichert zum Veranlassen des Computers, das Verfahren gemäß einem der Ansprüche 1 bis 2 durchzuführen oder das Verfahren gemäß einem der Ansprüche 3 bis 4 durchzuführen.

10. Computerprogrammprodukt, welches Computerprogrammanweisungen aufweist, wobei die Computerprogrammanweisungen, wenn sie mittels eines Computers ausgeführt werden, den Computer dazu veranlassen, das Verfahren gemäß einem der Ansprüche 1 bis 2 durchzuführen oder das Verfahren gemäß einem der Ansprüche 3 bis 4 durchzuführen.

## Revendications

1. Procédé de traitement de mini app, mis en œuvre par un serveur, comprenant :
la réception (S101) d'une demande de pré-téléchargement de mini app envoyée par une application hôte sur un dispositif électronique, la demande de pré-téléchargement de mini app étant générée par l'application hôte sur la base de données de navigation d'utilisateur et comprenant une commande d'ouverture de page de mini app ; la demande de pré-téléchargement de mini app étant une demande de téléchargement d'une mini app ;
l'analyse (S102) de la commande d'ouverture de page de mini app et l'obtention (S102) d'informations de téléchargement requises pour exécuter la commande d'ouverture de page de mini app ; les informations de téléchargement faisant référence à une liste complète de tous les paquets de téléchargement requis pour exécuter la commande d'ouverture de page de mini app ; et
l'envoi (S103) des informations de téléchargement à l'application hôte sur le dispositif électronique, de sorte que l'application hôte effectue une opération de pré-téléchargement de mini app en fonction des informations de téléchargement ;
dans lequel l'obtention (S102) des informations de téléchargement requises pour exécuter la commande d'ouverture de page de mini app comprend :
la détermination (S102-3-1) d'un paquet de téléchargement cible correspondant à la commande d'ouverture de page de mini app, le paquet de téléchargement cible étant un paquet de téléchargement pour accéder à une interface fonctionnelle correspondant à la commande d'ouverture de page de mini app ; et la détermination (S102-3-2) de la liste complète de tous les paquets de téléchargement requis pour exécuter la commande d'ouverture de page de mini app, selon que l'accès à l'interface fonctionnelle correspondant à la commande d'ouverture de page de mini app dépend d'un autre paquet de téléchargement de la mini app ;
dans lequel, en réponse à la détermination du fait que l'accès à l'interface fonctionnelle correspondant à la commande d'ouverture de page de mini app dépend d'un autre paquet de téléchargement de la mini app, la liste complète de tous les paquets de téléchargement est générée sur la base du paquet de téléchargement cible et d'un paquet de téléchargement ayant une dépendance avec le paquet de téléchargement cible ; et en réponse à la détermination du fait que l'accès à l'interface fonctionnelle correspondant à la commande d'ouverture de page de mini app ne dépend pas d'un autre paquet de téléchargement de la mini app, la prise en compte du paquet de téléchargement cible comme liste complète de tous les paquets de téléchargement ;
dans lequel le paquet de téléchargement cible comprend un sous-paquet indépendant, un sous-paquet ou un paquet principal ;
dans lequel le sous-paquet indépendant s'exécute indépendamment et ne dépend pas de l'exécution du paquet principal, et
en réponse à l'accès à la mini app à partir d'une interface correspondant au sous-paquet indépendant, le sous-paquet indépendant est téléchargé et le paquet principal n'est pas téléchargé ; et
dans lequel la dépendance comprend : le sous-paquetage s'exécute en fonction du paquet principal, et
en réponse à l'accès à la mini app à partir d'une interface correspondant au sous-paquet, le paquet principal et le sous-paquet sont tous les deux téléchargés.

2. Procédé selon la revendication 1, dans lequel le procédé comprend en outre : l'acquisition d'informations de version d'installation d'un composant fonctionnel de la mini app dans l'application hôte ; et la détermination s'il faut mettre à jour le composant fonctionnel de la mini app sur la base des informations de version d'installation.

3. Procédé de traitement de mini app, mis en œuvre par une application hôte sur un dispositif électronique, comprenant :
l'acquisition (S501) de données de navigation d'utilisateur ;
la collecte (S502) d'une commande d'ouverture de page de mini app sur la base des données de navigation d'utilisateur ;
la génération (S503) d'une demande de pré-téléchargement de mini app contenant la commande d'ouverture de page de mini app, et l'envoi de la demande de pré-téléchargement de mini app à un serveur ;
dans lequel la demande de pré-téléchargement de mini app est une demande de téléchargement d'une mini app ; et
la réception (S504) des informations de téléchargement, envoyées par le serveur, requises pour exécuter la commande d'ouverture de page de mini app, et l'exécution d'une opération de pré-téléchargement de mini app en fonction des informations de téléchargement ;
dans lequel les informations de téléchargement font référence à une liste complète de tous les paquets de téléchargement requis pour exécuter la commande d'ouverture de page de mini app ;
dans lequel l'obtention des informations de téléchargement par le serveur comprend : un paquet de téléchargement cible correspondant à la commande d'ouverture de page de mini app est déterminé par le serveur, dans lequel le paquet de téléchargement cible est un paquet de téléchargement pour accéder à une interface fonctionnelle correspondant à la commande d'ouverture de page de mini app ; et la liste complète de tous les paquets de téléchargement requis pour exécuter la commande d'ouverture de page de mini app est déterminée par le serveur selon que l'accès à l'interface fonctionnelle correspondant à la commande d'ouverture de page de mini app dépend d'un autre paquet de téléchargement de la mini app ;
dans lequel, en réponse à la détermination du fait que l'accès à l'interface fonctionnelle correspondant à la commande d'ouverture de page de mini app dépend d'un autre paquet de téléchargement de la mini app, la liste complète de tous les paquets de téléchargement est générée sur la base du paquet de téléchargement cible et d'un paquet de téléchargement ayant une dépendance avec le paquet de téléchargement cible ; et en réponse à la détermination du fait que l'accès à l'interface fonctionnelle correspondant à la commande d'ouverture de page de mini app ne dépend pas d'un autre paquet de téléchargement de la mini app, la prise en compte du paquet de téléchargement cible comme liste complète de tous les paquets de téléchargement ;
dans lequel le paquet de téléchargement cible comprend un sous-paquet indépendant, un sous-paquet ou un paquet principal ;
dans lequel le sous-paquet indépendant s'exécute indépendamment et ne dépend pas de l'exécution du paquet principal, et
en réponse à l'accès à la mini app à partir d'une interface correspondant au sous-paquet indépendant, le sous-paquet indépendant est téléchargé et le paquet principal n'est pas téléchargé ; et
dans lequel la dépendance comprend : le sous-paquet s'exécute en fonction du paquet principal, et
en réponse à l'accès à la mini app à partir d'une interface correspondant au sous-paquet, le paquet principal et le sous-paquet sont tous les deux téléchargés.

4. Procédé selon la revendication 3, dans lequel la collecte d'une commande d'ouverture de page de mini app basée sur les données de navigation d'utilisateur comprend :
l'accès à une interface d'affichage d'informations sur la base des données de navigation d'utilisateur, l'interface d'affichage d'informations affichant au moins une interface d'accès à mini app ; et
la collecte de la commande d'ouverture de page de mini app sur la base de l'interface d'accès à mini app.

5. Serveur, comprenant :
une unité de réception de demande (701) configurée pour recevoir une demande de pré-téléchargement de mini app envoyée par une application hôte sur un dispositif électronique, la demande de pré-téléchargement de mini app étant générée par l'application hôte sur la base des données de navigation d'utilisateur, et comprenant une commande d'ouverture de page de mini app ; la demande de pré-téléchargement de mini app étant une demande de téléchargement d'une mini app ;
une unité d'analyse (702) configurée pour analyser la commande d'ouverture de page de mini app et obtenir les informations de téléchargement requises pour exécuter la commande d'ouverture de page de mini app ; les informations de téléchargement faisant référence à une liste complète de tous les paquets de téléchargement requis pour exécuter la commande d'ouverture de page de mini app ; et
une unité d'envoi (703) configurée pour envoyer les informations de téléchargement à l'application hôte sur le dispositif électronique, de sorte que l'application hôte exécute une opération de pré-téléchargement de mini app en fonction des informations de téléchargement ;
dans lequel l'unité d'analyse (702) est configurée pour déterminer un paquet de téléchargement cible correspondant à la commande d'ouverture de page de mini app, dans lequel le paquet de téléchargement cible est un paquet de téléchargement pour accéder à une interface fonctionnelle correspondant à la commande d'ouverture de page de mini app ; et pour déterminer la liste complète de tous les paquets de téléchargement requis pour exécuter la commande d'ouverture de page de mini app selon que l'accès à l'interface fonctionnelle correspondant à la commande d'ouverture de page de mini app dépend d'un autre paquet de téléchargement de la mini app ;
dans lequel, en réponse à la détermination du fait que l'accès à l'interface fonctionnelle correspondant à la commande d'ouverture de page de mini app dépend d'un autre paquet de téléchargement de la mini app, la liste complète de tous les paquets de téléchargement est générée sur la base du paquet de téléchargement cible et d'un paquet de téléchargement ayant une dépendance avec le paquet de téléchargement cible ; et en réponse à la détermination du fait que l'accès à l'interface fonctionnelle correspondant à la commande d'ouverture de page de mini app ne dépend pas d'un autre paquet de téléchargement de la mini app, le paquet de téléchargement cible est pris en compte comme liste complète de tous les paquets de téléchargement ;
dans lequel le paquet de téléchargement cible comprend un sous-paquet indépendant, un sous-paquet ou un paquet principal ;
dans lequel le sous-paquet indépendant s'exécute indépendamment et ne dépend pas de l'exécution du paquet principal, et
en réponse à l'accès à la mini app à partir d'une interface correspondant au sous-paquet indépendant, le sous-paquet indépendant est téléchargé et le paquet principal n'est pas téléchargé ; et
dans lequel la dépendance comprend : le sous-paquet s'exécute en fonction du paquet principal, et
en réponse à l'accès à la mini app à partir d'une interface correspondant au sous-paquet, le paquet principal et le sous-paquet sont tous les deux téléchargés.

6. Serveur selon la revendication 5, comprenant en outre :
une unité d'acquisition de version d'installation (704) configurée pour acquérir des informations de version d'installation d'un composant fonctionnel de la mini app correspondant à la demande de pré-téléchargement de mini app dans l'application hôte ; et
une unité de mise à jour (705) configurée pour déterminer s'il faut mettre à jour le composant fonctionnel de la mini app sur la base des informations de version d'installation.

7. Dispositif électronique, comprenant :
une unité d'acquisition de données de navigation (901) configurée pour acquérir des données de navigation d'utilisateur ;
une unité de collecte (902) configurée pour collecter une commande d'ouverture de page de mini app sur la base des données de navigation d'utilisateur ;
une unité de génération de demande (903) configurée pour générer une demande de pré-téléchargement de mini app contenant la commande d'ouverture de page de mini app ;
une unité d'envoi de demande (904) configurée pour envoyer la demande de pré-téléchargement de mini app à un serveur ; la demande de pré-téléchargement de mini app étant une demande de téléchargement d'une mini app ; et
une unité de réception des informations de téléchargement (905) configurée pour recevoir des informations de téléchargement, envoyées par le serveur, requises pour exécuter la commande d'ouverture de page de mini app, et pour effectuer une opération de pré-téléchargement de mini app en fonction des informations de téléchargement ; les informations de téléchargement se référant à une liste complète de tous les paquets de téléchargement requis pour exécuter la commande d'ouverture de page de mini app ;
dans lequel le serveur est configuré pour : déterminer un paquet de téléchargement cible correspondant à la commande d'ouverture de page de mini app, dans lequel le paquet de téléchargement cible est un paquet de téléchargement pour accéder à une interface fonctionnelle correspondant à la commande d'ouverture de page de mini app ; et déterminer la liste complète de tous les paquets de téléchargement requis pour exécuter la commande d'ouverture de page de mini app, selon que l'accès à l'interface fonctionnelle correspondant à la commande d'ouverture de page de mini app dépend de l'autre téléchargement de la mini app ;
dans lequel, en réponse à la détermination du fait que l'accès à l'interface fonctionnelle correspondant à la commande d'ouverture de page de mini app dépend d'un autre paquet de téléchargement de la mini app, la liste complète de tous les paquets de téléchargement est générée sur la base du paquet de téléchargement cible et d'un paquet de téléchargement ayant une dépendance avec le paquet de téléchargement cible ; et en réponse à la détermination du fait que l'accès à l'interface fonctionnelle correspondant à la commande d'ouverture de page de mini app ne dépend pas d'un autre paquet de téléchargement de la mini app, le paquet de téléchargement cible est pris en compte comme liste complète de tous les paquets de téléchargement ;
dans lequel le paquet de téléchargement cible comprend un sous-paquet indépendant, un sous-paquet ou un paquet principal ;
dans lequel le sous-paquet indépendant s'exécute indépendamment et ne dépend pas de l'exécution du paquet principal, et
en réponse à l'accès à la mini app à partir d'une interface correspondant au sous-paquet indépendant, le sous-paquet indépendant est téléchargé et le paquet principal n'est pas téléchargé ; et
dans lequel la dépendance comprend : le sous-paquetage s'exécute en fonction du paquet principal, et
en réponse à l'accès à la mini app à partir d'une interface correspondant au sous-paquet, le paquet principal et le sous-paquet sont tous les deux téléchargés.

8. Dispositif électronique selon la revendication 7, dans lequel l'unité de collecte comprend :
une sous-unité d'affichage d'interface configurée pour accéder à une interface d'affichage d'informations sur la base des données de navigation d'utilisateur, l'interface d'affichage d'informations affichant au moins une interface d'accès à mini app ; et
une sous-unité de collecte configurée pour collecter la commande d'ouverture de page de mini app en fonction de l'interface d'accès à mini app.

9. Support de stockage non transitoire lisible par ordinateur stockant des instructions informatiques pour amener l'ordinateur à exécuter le procédé selon l'une quelconque des revendications 1 à 2, ou à exécuter le procédé selon l'une quelconque des revendications 3 à 4.

10. Produit programme d'ordinateur comprenant des instructions de programme d'ordinateur, les instructions de programme d'ordinateur, lorsqu'elles sont exécutées par un ordinateur, amenant l'ordinateur à exécuter le procédé selon l'une quelconque des revendications 1 à 2, ou à exécuter le procédé selon l'une quelconque des revendications 3 à 4.
